# EUROPEAN PATENT APPLICATION

(11) **EP 0 676 723 A2**
(43) Date of publication of application: **11.10.1995**
(21) Application number: 95104992.3
(22) Date of filing: 04.04.1995
(51) Int. Cl.: G06T 15/10

(54) **Graphic display**

(30) Priority: 04.04.1994 JP 65932/94
(71) Applicant: MITSUBISHI DENKI KABUSHIKI KAISHA, Tokyo 100 (JP)
(72) Inventor: Kato, Yoshiyuki, c/o Mitsubishi Denki K.K., Kamakura-shi, Kanagawa, 247 (JP); Kameyama, Masatoshi, c/o Mitsubishi Denki K.K., Kamakura-shi, Kanagawa, 247 (JP)
(74) Representative: Pfenning, Meinig & Partner

(57) **Abstract**

A graphic display is required to draw, at a high-speed, an antialiased polygon and texture polygon without generating a plurality of polygon images. The graphic display of the invention comprises a polygon generation circuit 1 for generating a two-dimensional polygon with aliasing, an antialiased line generation circuit 6 for generating edge pixels of an antialiased polygon, a frame buffer 2, an alpha blender 7 for performing semi-transparent processing for both edge pixels and image data from the frame buffer 2, and a drawing control circuit 8 for writing, in the frame buffer 2, the edge pixels onto the two-dimensional polygon from the polygon generation circuit 1 to effect an antialiasing drawing. For the implementation of the antialiasing drawing, a two-dimensional polygon with aliasing is written into the frame buffer 2 by the polygon generation circuit 1, and only the edges of the polygon are written into the frame buffer 2 by the antialiased line generation circuit 6.

## Description

### BACKGROUND OF THE INVENTION

### Field of the Invention

The present invention relates generally to a graphic display, and more particularly to an antialiasing drawing method allowing elimination of aliasing in the form of a jaggy pattern which may appear on the edges of a two-dimensional polygon or a three-dimensional polygon or which may occur on the edges of a texture mapped polygon, and ensuring a smooth, high quality and rapid display of the two-dimensional or three-dimensional polygon or texture mapped polygon.

### Description of the Related Arts

A multi-pass rendering method using an accumulation buffer has been hitherto known as a technique for the execution of antialiasing drawing of two-dimensional or three-dimensional polygons. The accumulation buffer based multi-pass rendering method is introduced in such literature (as,) e.g., "The Accumulation Buffer Hardware Support for High Quality Rendering" (by Paul Haeberli and Kurt Akeley, Computer Graphics 1990, Silicon Graphics Co.), and "High-Speed Image Generation Technique Using Multi-pass Rendering Method" (by Atsushi Kawabata and two others, Hitachi Ltd., Proc. of IPS, 1992).

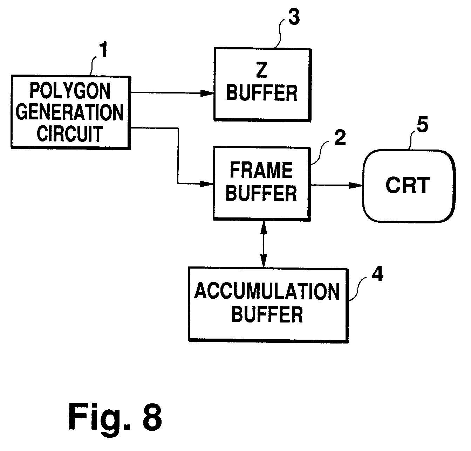

Fig. 8 is a block diagram of a graphic display, for the implementation of such a conventional multi-pass rendering method. In the diagram, a polygon generation circuit 1 generates a three-dimensional polygon. A frame buffer 2 stores image data. Also, a Z buffer 3 stores depth information. An accumulation buffer 4 performs arithmetic operations or the image data and storage of the arithmetic results. A CRT 5 allows information to be displayed thereon.

The operation of the above configuration will be described hereinbelow.

The polygon generation circuit 1 generates RGB values and Z values of a three-dimensional polygon, and performs a Z comparison in which thus generated Z values are compared with Z values from the Z buffer 3, and writes the RGB values into the frame buffer 2.

The Z comparison is, in general, processing for hidden surface removal. If a generated Z value is less than a Z value from the Z buffer 3, the content of the Z buffer 3 is updated into the new Z value, and the RGB value at that time is written into the frame buffer 2. On the contrary, if the generated Z value is greater than the Z value from the Z buffer 3, the Z buffer 3 is not updated, and the RGB value at that time is not written into the frame buffer 2.

Then, the polygon generation circuit 1 clears frame butter 2 and initializes Z butter 3, and vertically or horizontally shifts apex data of the same polygon by a width of one pixel or less to generate polygons and write them into the frame buffer 2. The thus shifted image data of the frame buffer 2 are each time added to the data of the accumulation buffer 4 in pixel units. The final data stored in the accumulation buffer 4 are divided by the number of times of drawing in pixel units, and then written back into the frame buffer 2, resulting in an antialiased final image.

The conventional graphic display thus configured entails a problem that in the multi-pass rendering method using the accumulation buffer, there must be generated a plurality of images shifted by a width of 1 pixel or less. In the case, e.g., where one pixel is divided into 3 x 3 subpixel grids, the same image with only shifted coordinates must be generated nine times. This will necessitate a time nine times along as that required for the generation of an aliased image. Moreover, if including a time required for the addition as well as for data transfer between the frame buffer 2 and the accumulation buffer 4, the display speed will be further reduced, making real-time display substantially impossible. Also, the accumulation buffer 4 must be a bulk memory larger in the number of bits than the frame buffer 2, since the image data from the frame buffer 2 are sequentially added to the accumulation buffer 4. This will result in an extremely large-scale hardware implementation.

### SUMMARY OF THE INVENTION

It is therefore the object of the present invention to overcome the above deficiencies involved in the prior art and to provide a graphic display capable of drawing an antialiased polygon and texture polygon at a high-speed without generating a plurality of polygon images.

According to a first aspect of the present invention, in order to accomplish the above object, there is provided a graphic display comprising polygon generation means for generating a two-dimensional polygon with aliasing; antialiased line generation means for generating edge pixels of an antialiased polygon; a frame buffer for storing image data; blender means for performing semitransparent processing for both edge pixels generated by the antialiased line generation means and image data from the frame buffer; and control means for writing to the frame buffer, the edge pixels onto the two-dimensional polygon from the polygon generation means, to simultaneously effect a drawing of the two-dimensional polygon with aliasing and an antialiasing drawing of two-dimensional polygon edges.

Under the above configuration, the graphic display of the present invention implements an antialiasing drawing of a two-dimensional polygon in two-dimensional graphics, by writing a two-dimensional polygon with aliasing into the frame buffer using the polygon generation means, and by writing only the edges of the polygon into the frame buffer using the antialiased line generation means.

According to a second aspect of the present invention, in order to achieve the above object, there is provided a graphic display comprising polygon generation means for generating a three-dimensional polygon with aliasing; antialiased line generation means for generating edge pixels of an antialiased three-dimensional polygon; a frame buffer for storing image data; a depth (Z) buffer for storing depth information; blender means for performing semi-transparent processing for both edge pixels generated by the antialiased line generation means and image data from the frame buffer; and control means for writing to the frame buffer, the edge pixels onto the three-dimensional polygon from the polygon generation means, to effect a drawing of the three-dimensional polygon with aliasing, while effecting an antialiasing drawing of three-dimensional polygon edges without updating depth information from the depth buffer.

By virtue of the above configuration, the graphic display of the present invention implements an antialiasing drawing of a three-dimensional polygon in three-dimensional graphics, by writing a three-dimensional polygon into the frame buffer using the polygon generation means, and by writing only the sides of the polygon into the frame buffer using the antialiased line generation means.

According to a third aspect of the present invention, in order to attain the above object, there is provided a graphic display comprising polygon generation means for generating a texture mapped polygon with aliasing; antialiased line generation means for generating edge pixels of an antialiased texture mapped polygon; texture generation means for generating image data for texture mapping, from texture addresses derived from both the polygon generation means and the antialiased line generation means; a frame buffer for storing image data; a depth (Z) buffer for storing depth information; blender means for imparting semi-transparent processing to both edge pixels generated by the antialiased line generation means and image data from the frame buffer; and control means for writing to the frame buffer, the edge pixels onto a texture polygon from the texture generation means, to effect a drawing of the texture polygon with aliasing while effecting an antialiasing drawing of texture polygon edges without updating the depth information from the depth buffer.

With the above configuration, the graphic display of the present invention implements an antialiased drawing of a texture mapped polygon in two-dimensional and three-dimensional graphics executing texture mapping, by drawing a texture mapped polygon with aliasing using the texture polygon generation means, and by drawing edges of the texture mapped polygon with antialiased lines using the antialiased line generation means.

According to a fourth aspect of the present invention, in order to realize the above object, there is provided a graphic display comprising polygon generation means for generating a polygon with aliasing; line generation means for providing as its output line data consisting of coordinate information; transparency value generation means for finding transparencies of pixels, based on line data from the line generation means, and converting them into proper transparency values; edge pixel generation means for generating edge pixels of an antialiased polygon; a frame buffer for storing image data; blender means for performing semi-transparency processing for both edge pixels generated by the edge pixel generation means and image data from the frame buffer; and control means for writing to the frame buffer, the edge pixels onto the polygon from the polygon generation means, to simultaneously effect a drawing of the polygon with aliasing and an antialiasing drawing of polygon edges.

In the graphic display of the present invention thus configured, the transparency value generation means finds, based on line data from the line generation means, transparencies of the pixels which are in turn converted into proper transparency values and then supplied to the blender means through which semi-transparent processing is imparted to edge pixels generated by the edge pixel generation means and image data from the frame buffer, whereupon in the frame buffer, the edge pixels are written onto the polygon derived from the polygon generation means, thereby simultaneously effecting a drawing of a polygon with aliasing and an antialiasing drawing of polygon edges.

### BRIEF DESCRIPTION OF THE DRAWINGS

Fig. 1 is a block diagram of a graphic display according to a first embodiment of the present invention.

Fig. 2 is a block diagram of a graphic display according to a second embodiment of the present invention.

Fig. 3 is a block diagram of a graphic display according to a third embodiment of the present invention.

Fig. 4 is a partial block diagram of a graphic display according to a fourth embodiment of the present invention.

Fig. 5 is a detailed block diagram of an alpha generation circuit constituting the configuration of Fig. 4.

Fig. 6 is a diagram describing the operation of the configuration of Fig. 5.

Fig. 7 is a diagram describing the method of generating an antialiased polygon by superimposing antialiased edges onto an aliased polygon.

Fig. 8 is a block diagram of a conventional graphic display.

### DESCRIPTION OF THE PREFERRED EMBODIMENTS

The present invention will now be described in greater detail relative to non-limitative embodiments and with reference to the accompanying drawings.

### Embodiment 1

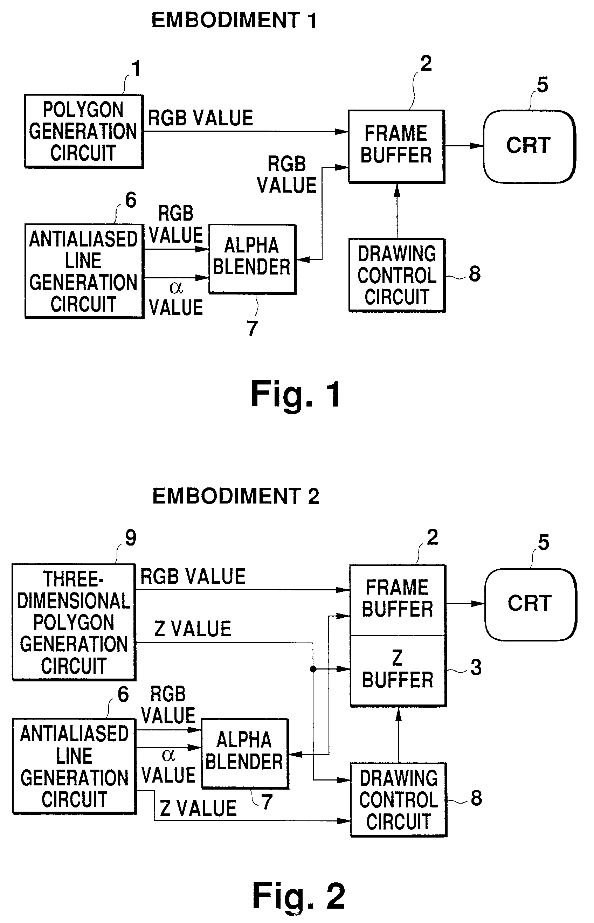

Fig. 1 is a block diagram of a graphic display configured in accordance with a first embodiment of the present invention. As shown in Fig. 1, an antialiased line generation circuit 6 serves to generate edge pixels of an antialiased polygon. An alpha blender 6 is provided for semi-transparent processing of data from the antialiased line generation circuit 6 and data from a frame buffer 2. A drawing control circuit 8 controls the writing of pixels into the frame buffer 2. It is to be appreciated that a polygon generation circuit 1 is configured so as to generate a two-dimensional polygon with aliasing.

The operation of the above configuration will be described hereinbelow.

The configuration depicted in Fig. 1 aims at implementing an antialiasing drawing method for a two-dimensional polygon. The polygon generation circuit 1 finds left and right edges constituting a polygon by use of a digital differential analyzer (hereinafter referred to as DDA) and generates in sequence coordinates and RGB values of pixels lying between the left and right edges in a scanning line direction.

The RGB values generated here are written into the frame buffer 2. The control of writing into the frame buffer 2 is effected by the drawing control circuit 8.

In order to draw by use of antialiased lines the same polygon sides as those generated by the polygon generation circuit 1, on the other hand, the antialiased line generation circuit 6 generates coordinates, RGB values, and transparencies (hereinafter referred to as alpha values) of antialiased sides.

The RGB values of pixels generated by the antialiased line generation circuit 6 are subjected to semi-transparent processing together with data from the frame buffer 2 by the alpha blender 7, and then written into the frame buffer 2. Also herein, the control of the writing is carried out by the drawing control circuit 8.

Finally, a pictorial image of the antialiased polygon written into the frame buffer 2 appears on a CRT 5.

According to the first embodiment, an antialiasing drawing of a two-dimensional polygon can be implemented in two-dimensional graphics, by describing a two-dimensional polygon with aliasing using the polygon generation circuit 1, and by describing only the sides of the two-dimensional polygon using antialiased lines using the antialiased line generation circuit 6.

Thus, due to its very simple processing, this system will ensure a very high-speed two-dimensional antialiasing drawing as well as easy hardware implementation.

Also, this system will ensure an effective application to a case where-polygons are contiguous to one another, due to no occurrence of pixels differing in brilliance on the borders of the adjacent polygons.

In this embodiment, as described hereinabove, a two-dimensional polygon with aliasing generated by the polygon generation circuit 1 is written into the frame buffer 2; and the sides of the polygon are exclusively written into the same frame buffer 2 by the antialiased line generation circuit 6, thereby effecting a high-speed antialiasing drawing of the two-dimensional polygon.

### Embodiment 2

Fig. 2 is a block diagram of a graphic display configured in accordance with a second embodiment of the present invention. In the diagram, a three-dimensional polygon generation circuit 9 acts to generate a three-dimensional polygon with aliasing, to supply RGB values to a frame buffer 2 and Z values to both a Z buffer 3 and a drawing control circuit 8. It is to be appreciated that an antialiased line generation circuit 6 will also supply the Z values to the drawing control circuit 8.

The operation of the above configuration will be described hereinbelow.

The configuration depicted in Fig. 2 aims at implementing an antialiasing drawing method for a three-dimensional polygon. First of all, the three-dimensional polygon generation circuit 9 finds left and right edges constituting a polygon by use of a DDA and generates in sequence coordinates, Z values and RGB values of pixels lying between the left and right edges in a scanning line direction.

By the function of the drawing control circuit 8, Z values of pixels generated by the circuit 9 are compared with Z values of a Z buffer 3, and if the former is less than the latter, the generated pixel RGB values and Z values are respectively written into the frame buffer 2 and Z buffer 3. On the contrary, if the Z values generated by the three-dimensional polygon generation circuit 9 are greater than those of the Z buffer 3, no writing into the frame buffer 2 and Z buffer 3 will be performed.

In order to draw, using antialiased lines the same polygon sides as those generated by the three-dimensional polygon generation circuit 9, on the other hand, the antialiased line generation circuit 6 generates coordinates, Z values, color values, and alpha values of antialiased sides. The Z values of the pixels generated here are compared with the Z values of the Z buffer 3 under the control of the drawing control circuit 8. As a result of this comparison, if the Z values from the antialiased line generation circuit 6 are less than the Z values of the Z buffer 3, the generated pixel color values are subjected to semi-transparent processing by an alpha blender 7 and then written into the frame buffer 2.

It will be noted in this case that the Z buffer 3 is not updated in order to prevent a boundary line from occurring due to pixels having lower alpha values (brilliances) which may remain on the adjoining parts when the polygons are contiguous to one another.

On the contrary, if Z values generated by the antialiased line generation circuit 6 are greater than those of the Z-buffer 3, the frame buffer 2 is not written at all.

Finally, an image of an antialiased polygon written into the frame buffer 2 appears on the CRT 5.

According to the second embodiment, an antialiasing drawing of a three-dimensional polygon can be implemented in three-dimensional graphics, by drawing a three-dimensional polygon with aliasing using the three-dimensional polygon generation circuit 9, and by drawing only the sides of the three-dimensional polygon with antialiased lines using the antialiased line generation circuit 6.

Thus, due to its very simple processing, this system will ensure a very high-speed three-dimensional antialiasing drawing as well as easy hardware implementation.

Also, this system will ensure an effective application to a case where polygons are contiguous to one another, since any pixels differing in brilliance do not occur on the borders of the adjacent polygons.

In this embodiment, as described hereinabove, a three-dimensional polygon with aliasing generated by the three-dimensional polygon generation circuit 9 is written into the frame buffer 2, and the sides of the polygon are exclusively written into the same frame buffer 2 by the antialiased line generation circuit 6, thereby effecting high-speed antialiasing drawing of the three-dimensional polygon.

### Embodiment 3

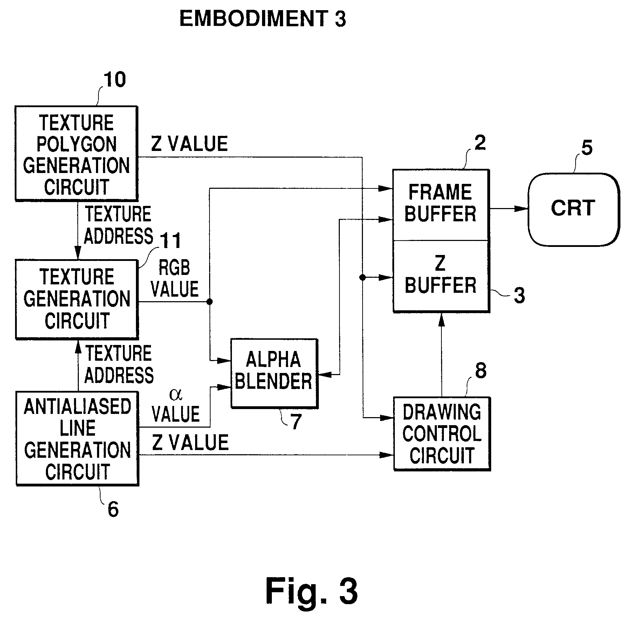

Fig. 3 is a block diagram of a graphic display configured in accordance with a third embodiment of the present invention. In the diagram, a texture polygon generation circuit 10 functions to generate a texture polygon with aliasing and issues Z values and texture addresses. A texture generation circuit 11 is intended to generate RGB values for a texture map, based on texture addresses derived from the texture polygon generation circuit 10 and from an antialiased line generation circuit 6. It should be appreciated that the antialiased line generation circuit 6 is configured to generate edge pixels of an antialiased texture polygon and issues alpha values, Z values and texture addressed.

The operation of the above configuration will be described hereinbelow.

The configuration depicted in Fig. 3 aims at implementing an antialiasing drawing method for a texture polygon. First of all, the texture polygon generation circuit 10 finds left and right edges constituting a polygon by use of a DDA and generates, in sequence, coordinates, Z values and RGB values of pixels lying between the left and right edges in a scanning line direction.

Simultaneously, the texture polygon generation circuit 10 also generates texture addresses for the execution of texture mapping. The texture generation circuit 11 performs conversion processing for the texture mapping, from the texture addresses generated by the texture polygon generation circuit 10 and generates texture mapped RGB values.

Under the control of a drawing control circuit 8, Z values generated by the texture polygon generation circuit 10 are compared with Z values of a Z buffer 3, and if the former is less than the latter, the RGB values derived from the texture generation circuit 11 are written into a frame buffer 2. At the same time, the Z values generated by the texture polygon generation circuit 10 will be written into the Z buffer 3.

On the contrary, if the Z values generated by the texture polygon generation circuit 10 are greater than those of the Z buffer 3, the frame buffer 2 and Z buffer 3 will not be written.

In order to draw, using antialiased lines, the same polygon sides as those generated by the texture polygon generation circuit 10, the antialiased line generation circuit 6 generates coordinates, Z values, alpha values, and texture addresses of antialiased sides.

The texture generation circuit 11 performs conversion processing for texture mapping, from the texture addresses generated by the antialiased line generation circuit 10 and generates texture mapped RGB values.

In compliance with the control of the drawing control circuit 8, the Z values generated by the antialiased line generation circuit 6 are compared with the Z values of the Z buffer 3, and if the former is less than the latter, the RGB values generated by the texture generation circuit 11 are subjected to semi-transparent processing by an alpha blender 7 and then written into the frame buffer 2.

It will be noted in this case that the Z buffer 3 is not updated in order to prevent a boundary line from occurring due to pixels having lower alpha values (luminances) which may remain on the adjoining parts when the polygons are contiguous to one another.

On the contrary, if the Z values generated by the antialiased line generation circuit 6 are greater than those of the Z-buffer 3, the frame buffer 2 and Z buffer 3 are not written to at all.

Finally, an image of an antialiased texture polygon written into the frame buffer 2 appears on the CRT 5.

According to the third embodiment, an antialiasing drawing of a texture mapped polygon can be implemented in two-dimensional and three-dimensional graphics with texture mapping, by drawing a texture mapped polygon with aliasing using the texture polygon generation circuit 10, and by drawing only the sides of the texture mapped polygon using antialiased lines generated by the antialiased line generation circuit 6.

Thus, due to its very simple processing, this system will ensure a very high-speed three-dimensional antialiasing drawing as well as easy hardware implementation.

Also, this system will ensure an effective application to a case where polygons are contiguous to one another, since any pixels differing in brilliance do not occur on the borders of the adjacent polygons.

In this embodiment, as described hereinabove, an antialiased texture polygon with aliasing generated by the texture polygon generation circuit 10 is written into the frame buffer 2, and the sides of the polygon are exclusively written into the same frame buffer 2 by the antialiased line generation circuit 6, thereby effecting a high-speed antialiasing drawing of the texture polygon.

### Embodiment 4

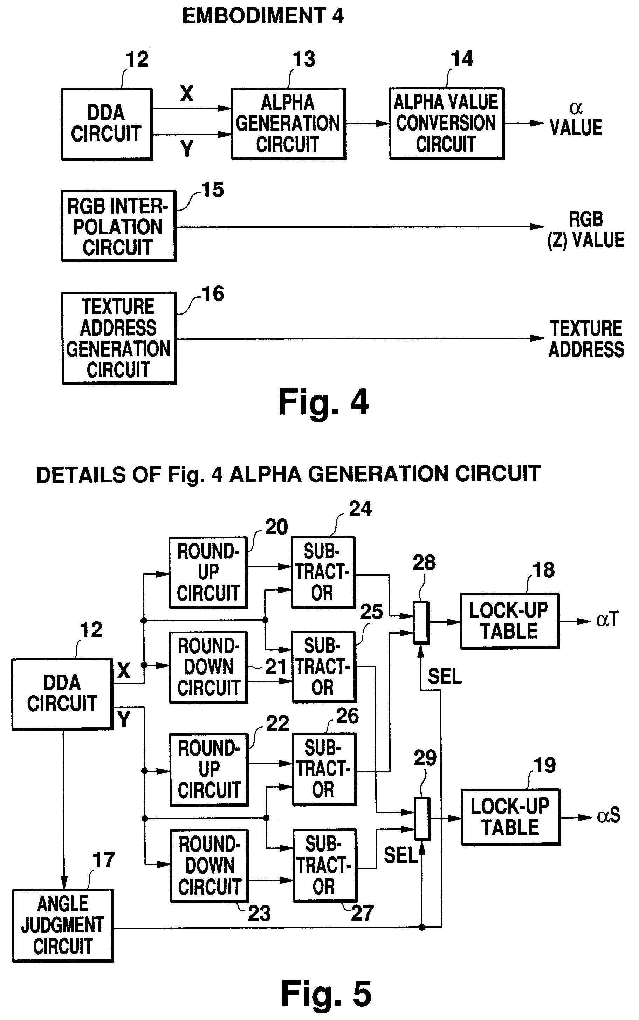

Fig. 4 is a partial block diagram of a graphic display according to a fourth embodiment of the present invention, showing in particular a configuration, by way of example, of the antialiased line generation circuit 6 employed in the arrangements depicted in Figs. 1, 2 and 3. In the diagram, a DDA circuit 12 generates lines and issues X and Y coordinates of the lines (more precisely, of points resting on the lines). An alpha generation circuit 13 finds alpha values of pixels, based on X and Y coordinates received from the DDA circuit 12. An alpha value conversion circuit 14 appropriately corrects alpha values derived from the alpha generation circuit 13 with, e.g., gamma correction to obtain proper alpha values. Then, an RGB interpolation circuit 15 generates RGB values for shading and provides the RGB (Z) values to the exterior. A texture address generation circuit 16 generates texture addresses upon texture mapping.

The operation of the above configuration will be described hereinbelow.

In the first place, the DDA circuit 12 locates coordinates of pixels lying between the left and right edges and outputs them in the form of X and Y coordinates. Then, the alpha generation circuit 13 finds alpha values of the pixels, based on the X and Y coordinates received from the DDA circuit 12. Further, the alpha value conversion circuit 14 subjects the alpha values from the alpha generation circuit 13 to, e.g., the gamma correction for the conversion into proper alpha values, and provides the results as its output to the exterior.

On the contrary, the RGB interpolation circuit 15 generates RGB values for shading. Also, the texture address generation circuit 16 generates texture addresses upon texture mapping.

As a result of the operation described above, the antialiased line generation circuit 6 will issue completely corrected alpha values, and interpolated RGB (Z) values and texture addresses.

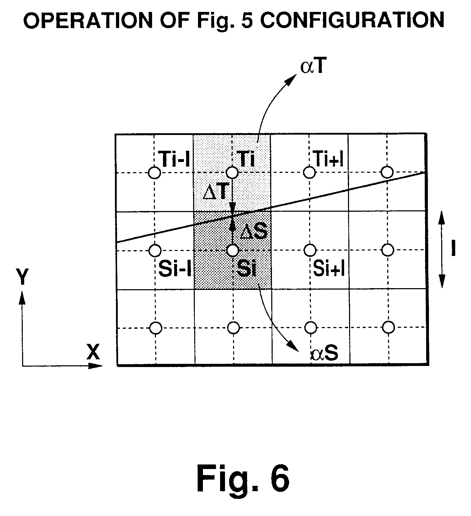

Fig. 5 is a block diagram showing the configuration of the alpha generation circuit 13 employed in the arrangement of Fig. 4. In the diagram, a round-up circuit 20 rounds up X coordinates received from the DDA circuit 12 to an integer. A round-down circuit 21 rounds down X coordinates received from the DDA circuit 12 to an integer. An round-up circuit 22 rounds up Y coordinates derived from the DDA circuit 12 to an integer. The round-down circuit 23 rounds down Y coordinates derived from the DDA circuit 12 to an integer. A subtractor 24 subtracts X coordinates delivered from the DDA circuit 12, from X coordinates from the round-up circuit 20. A subtractor 25 subtracts X coordinates delivered from the round-down circuit 21, from X coordinates from the DDA circuit 12. On the other hand, a subtractor 26 subtracts Y coordinates delivered from the DDA circuit 12, from Y coordinates from the round-up circuit 22. A subtractor 27 subtracts Y coordinates delivered from the round-down circuit 23, from Y coordinates from the DDA circuit 12. Then, a selection circuit 28 switchably selects either X difference values received from the subtractor 24 or Y difference values received from the subtractor 26. A selection circuit 29 switchably selects either X difference values derived from the subtractor 25 or Y difference values derived from the subtractor 27. Further, a look-up table 18 converts the difference values output from the selection circuit 28 into proper alpha values α T. A look-up table 19 converts the difference values output from the selection circuit 29 into proper alpha values α S. On the contrary, an angle judgment circuit 17 judges whether the inclination of a line is not less than 45 degrees in response to a signal from the DDA circuit 12, to provide selection signals SEL as outputs to the selection circuits 28 and 29.

The operation of the above configuration will now be described with reference to an explanatory diagram of Fig. 6 which represents distances between a true straight line and pixel centers in Y and X directions, squares defined by solid lines each signifying a single pixel.

In the DDA circuit 12, increments are found when X and Y are changed by one from preset starting point coordinates and end point coordinates, and incremental arithmetic is carried out for each step, to generate X and Y coordinates with fixed points.

Here, based on angle judgment by the angle judgment circuit 17, if the inclination of a line is less than 45 degrees in a first quadrant, the incremental arithmetic is performed for Y, whereas if the inclination is not less than 45 degrees, the incremental arithmetic is performed for X.

Description will now be given of a case of an inclination less than 45 degrees.

Y coordinates generated in the DDA circuit 12 are subjected to integer round-up processing by the round-up circuit 22, and to integer round-down processing by the round-down circuit 23.

The subtractor 26 subtracts Y coordinates output from the DDA circuit 12, from Y coordinates output from the round-up circuit 22 to find a distance Δ T in the Y direction to the true line from the center of a pixel lying above, namely a pixel indicated by Ti in Fig. 6.

On the contrary, the subtractor 27 subtracts Y coordinates output from the round-down circuit 23, from Y coordinates output from the DDA circuit 12 to find a distance Δ S in the Y direction from the true line to the center of a pixel lying below, namely a pixel indicated by Si.

Difference data derived from the subtractors 26 and 27 are respectively supplied to the selection circuits 28 and 29. With the inclination less than 45 degrees, in response to the selection signals SEL from the angle judgment circuit 17, the difference data from the subtractors 26 and 27 are selected and respectively supplied to the look-up tables 18 and 19.

The look-up tables 18 and 19 subject the input difference data to brilliance modulation such as a gamma correction, to obtain α T and α S which are final alpha values.

It is to be appreciated in the case of an inclination not less than 45 degrees that X coordinate data are processed in the same manner to find final alpha values.

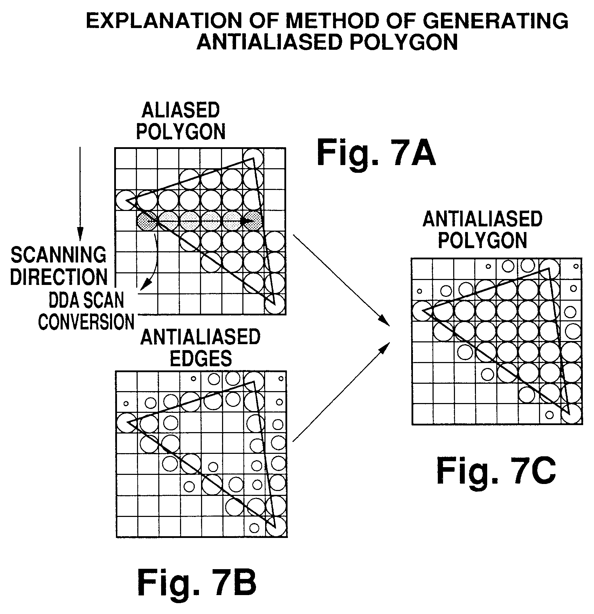

In this way, a polygon with aliasing and antialiased polygon sides are separately drawn to effect an antialiasing drawing of a two-dimensional or three-dimensional polygon. Thus, as shown in an explanatory diagram of Fig. 7, antialiased edges, that is, antialiased sides depicted in Fig. 7B are superimposed on an aliased polygon obtained through a scan conversion depicted in Fig. 7A, resulting in an antialiased polygon depicted in Fig. 7C.

In addition, when polygons are contiguous to one another, this system will not allow pixels differing in color values or brilliance values to appear on the borders of the adjacent polygons.

As discussed hereinabove, alpha values can be obtained from the values output from the DDA circuit 12 so that the processing required for the calculation of the alpha values will be limited to addition or subtraction of fixed points and reference to the look-up table for executing, e.g., gamma correction. In consequence, a high-speed processing is accomplished.

In the graphic display of the present invention, antialiased polygon sides generated by the antialiased line generation circuit are superimposed on an aliased polygon generated by the polygon generation circuit, thereby ensuring a high-speed antialiasing drawing of a polygon and preventing the occurrence of pixels different in color values or brilliance values on the borders of adjacent polygons and presenting a processing method suitable for hardware implementation.

According to the present invention, an antialiasing drawing of a three-dimensional polygon can be implemented in three-dimensional graphics, by drawing a three-dimensional polygon with aliasing by the polygon generation means, and by drawing sides of the three-dimensional polygon using antialiased lines by the antialiased line generation means. Due to its very simple processing, this system will ensure a very high-speed three-dimensional antialiasing drawing compared with the conventional systems, and will facilitate the hardware implementation to a greater extent.

Also, this system will ensure an effective application to a case where polygons are contiguous to one another since pixels having different brilliances do not appear on the borders of the adjacent polygons.

Further, according to the present invention, an antialiasing drawing of an texture mapped polygon can be implemented in two-dimensional and three-dimensional graphics with texture mapping, by drawing a texture mapped polygon with aliasing using the polygon generation means, and by drawing sides of the texture mapped polygon using antialiased lines generated by the antialiased line generation means. Due to its very simple processing, this system will ensure a very high-speed three-dimensional antialiasing drawing compared with the conventional systems, and will facilitate the hardware implementation to a greater extent. Also, this system will ensure an effective application to a case where polygons are contiguous to one another since pixels having different brilliances do not appear on the borders of the adjacent polygons.

Moreover, according to the present invention, alpha values can be obtained from the values output from the DDA circuit, and the processing required for the calculation of the alpha values is only the addition or subtraction of fixed points and reference to the look-up table for executing, e.g., gamma correction, to thereby speed up the processing.

## Claims

1. A graphic display comprising:
polygon generation means for generating a two-dimensional polygon with aliasing;
antialiased line generation means for generating edge pixels of an antialiased polygon;
a frame buffer for storing image data;
blender means for performing semitransparent processing for both edge pixels generated by said antialiased line generation means and image data from said frame buffer; and
control means for writing, in said frame buffer, said edge pixels onto said two-dimensional polygon from said polygon generation means, to simultaneously effect a drawing of said two-dimensional polygon with aliasing and an antialiasing drawing of two-dimensional polygon edges.

2. A graphic display comprising:
polygon generation means for generating a three-dimensional polygon with aliasing;
antialiased line generation means for generating edge pixels of an antialiased three-dimensional polygon;
a frame buffer for storing image data;
a depth (Z) buffer for storing depth information;
blender means for imparting semi-transparent processing to both edge pixels generated by said antialiased line generation means and image data from said frame buffer; and
control means for writing, in said frame buffer, said edge pixels onto said three-dimensional polygon from said polygon generation means, to effect a drawing of said three-dimensional polygon with aliasing, while effecting an antialiasing drawing of three-dimensional polygon edges without updating depth information from said depth buffer.

3. A graphic display comprising:
polygon generation means for generating a texture mapped polygon with aliasing;
antialiased line generation means for generating edge pixels of an antialiased texture mapped polygon;
texture generation means for generating image data for texture mapping, from texture addresses derived from both said polygon generation means and said antialiased line generation means;
a frame buffer for storing image data;
a depth (Z) buffer for storing depth information;
blender means for performing semi-transparent processing for both edge pixels generated by said antialiased line generation means and image data from said frame buffer; and
control means for writing, in said frame buffer, said edge pixels onto a texture polygon from said texture generation means, to effect a drawing of said texture polygon with aliasing while effecting an antialiasing drawing of texture polygon edges without updating the depth information from said depth buffer.

4. A graphic display comprising:
polygon generation means for generating a polygon with aliasing;
line generation means for providing as its output line data consisting of coordinate information;
transparency value generation means for finding transparencies of pixels, based on line data from said line generation means, and converting them into proper transparency values;
edge pixel generation means for generating edge pixels of an antialiased polygon;
a frame buffer for storing image data;
blender means for performing semi-transparency processing for both edge pixels generated by said edge pixel generation means and image data from said frame buffer; and
control means for superimposing, in said frame buffer, said edge pixels onto said polygon from said polygon generation means, to simultaneously effect a drawing of said polygon with aliasing and an antialiasing drawing of polygon edges.
